# EUROPÄISCHE PATENTSCHRIFT

(11) **EP 1 340 009 B1**
(45) Veröffentlichungstag und Bekanntmachung des Hinweises auf die Patenterteilung: **26.08.2009**
(21) Anmeldenummer: 01990472.1
(22) Anmeldetag: 03.12.2001
(51) Int. Cl.: F16J 15/08, F16J 15/12

(54) **FLACHDICHTUNG FÜR EINE KOLBENKRAFT-ODER ARBEITSMASCHINE**
GASKET FOR A PISTON ENGINE OR WORKING MACHINE
JOINT PLAT POUR MOTEUR A PISTON OU MACHINE-OUTIL

(30) Priorität: 06.12.2000 DE 10060555
(43) Veröffentlichungstag der Anmeldung: 03.09.2003
(73) Patentinhaber: Carl Freudenberg KG, 69469 Weinheim (DE)
(72) Erfinder: HILGERT, Christoph, 51491 Overath (DE)
(86) Internationale Anmeldenummer: PCT/EP2001/014075
(87) Internationale Veröffentlichungsnummer: WO 2002/046646

(56) Entgegenhaltungen:
- EP-A- 0 494 801
- DE-A- 4 337 757
- DE-A- 19 536 718
- DE-A- 19 731 491

## Beschreibung

### Technisches Gebiet

Die Erfindung betrifft eine Flachdichtung für Zylinderkopfdichtungen bei Kolbenkraftmaschinen, aus zwei aufeinander geschichteten Blechen einer Dicke von 0,05 - 0,5 mm, die durch die Außenkontur und/oder zumindest eine Zylinderbohrung und/oder einen Wasser- oder Öldurchlass des Zylinderkopfes gebildete Randbereiche aufweist, an denen zumindest eine umlaufende erste Sicke eines der Bleche angrenzt und wobei das zweite Blech die erste Sicke überbrückt und im Bereich der ersten Sicke zumindest eine zweite Sicke hat, die im Querschnitt des Sickenprofils unterschiedlich zur ersten Sicke ausgebildet ist.

### Stand der Technik

Flachdichtungen für Kolbenkraft- oder Arbeitsmaschinen sind in verschiedenen Ausführungsformen bekannt, beispielsweise aus EP 0 494 801 A1, die eine Flachdichtung gemäß dem einleitenden Teil des Anspruchs 1 offenbart, DE 197 31 491, DE 195 39 245, DE 195 31 232, DE 42 05 824. Bei Nutzfahrzeugmotoren dienen derartige Zylinderkopfdichtungen dazu, die Trennfuge zwischen dem Zylinderkopf und dem Zylinderblock abzudichten. Sie bestehen in der Praxis meist aus einer oder mehreren zu einem Laminat verbundenen Metallblechplatten und besitzen eine oder mehrere Brennraumdurchgangsöffnungen sowie eine oder mehrere Flüssigkeitsdurchlassöffnungen, wovon letztere den Durchgang von Kühlwasser und/oder Schmieröl zwischen Zylinderkopf und Zylinderblock ermöglichen. Bei gebräuchlichen Zylinderkopfdichtungen umschließt häufig eine Vollsicke in einem Randbereich dichtend die Brennraumdurchgangsöffnungen. Auch die Abdichtung der Flüssigkeksdurchgangsöffnungen erfolgt oft durch eine Sicke, welche in einem Randbereich die Öffnung umschließt. Beim Einbau der Zylinderkopfdichtung werden der Zylinderkopf und der Motorblock durch die Vorspannkraft der Zylinderschrauben zusammengedrückt. Die Sicken der dazwischen liegenden Flachdichtung stützen sich gegen die benachbarten Dichtflächen des Zylinderkopfs bzw. Motorblocks ab. Unmittelbar im Randbereich der Brennraumdurchgangsöffnungen und im Bereich der Zylinderkopfschrauben herrschen die größten spezifischen Flächenpressungen. Sogenannte Stopper umschließen die Brennraumdurchgänge und wirken als Verformungsbegrenzer. Neben dieser statischen Pressung ist die Dichtung im Betrieb des Motors dynamischen Belastungen ausgesetzt. Der Abstand zwischen den Dichtflächen ist zeitlich und örtlich nicht konstant. Angeregt durch die periodischen Explosionen im Verbrennungsraum kommt es zu vertikalen und horizontalen Relativbewegungen des Zylinderkopfs gegenüber dem Zylinderblock. Die Amplitude dieser Dichtspaltbewegungen ist umso größer, je größer der Abstand der betrachteten Stelle von den Zylinderkopfschrauben ist. Ein zeitlich stationärer Zustand lässt sich im Dichtspalt weder bei der Brennraum- noch bei der Flüssigkeitsabdichtung erreichen. Für eine dauerhafte und einwandfreie Abdichtung muß die Dichtung diesen Relativbewegungen möglichst lange durch ein elastisch nachgiebiges Verhalten folgen können. Dabei darf die Flachdichtung den dichtenden elastischen Kontakt mit den Dichtflächen des Zylinderblocks bzw. des Motorblocks nicht verlieren. Die Funktionsdauer dieses elastischen Rückfederungsvermögens begrenzt im wesentlichen die Lebensdauer der Dichtung. Nach einer bestimmten Lastwechselzahl verringern sich die Federungseigenschaften der Flachdichtung. Am Ende der Gebrauchsdauer kommt es zu Undichtigkeiten bei der Abdichtung der Brennräume bzw. der Flüssigkeitsdurchtrittsöffnungen.

### Darstellung der Erfindung

Aufgabe der Erfindung ist es, eine Flachdichtung mit verbesserter Dichtwirkung, hohem elastischem Rückfedervermögen, geringen Herstellungskosten und langer Betriebsdauer anzugeben.

Diese Aufgabe wird erfindungsgemäß bei einer Flachdichtung der eingangs genannten Art mit den kennzeichnenden Merkmalen von Anspruch 1 gelöst. Auf vorteilhafte Ausgestaltungen nehmen die Unteransprüche Bezug.

Bei der erfindungsgemäßen Flachdichtung sind zumindest zwei aufeinander geschichtete Bleche vorgesehen. Eines dieser Bleche weist eine Sicke auf, welche die Öffnung einer Brennkammer oder eines Flüssigkeitsdurchgangs umschließt. Das andere dieser Bleche überbrückt mit seiner Sicke diese Sicke, wobei beide Bleche beiderseits der Sicken unlösbar miteinander verbunden sind. Durch diese Verbindung zwischen den Blechen behält die Flachdichtung über eine lange Betriebsdauer ein sehr gutes elastisches Rückfedervermögen. Die Blechverbindung kann die abzudichtende Öffnung vollständig umschließen oder - je nach gewünschter Federsteifigkeit - nur abschnittsweise oder punktförmig längs des Umfangs ausgeführt sein. Die Verbindung der beiden Bleche an der Sickenbasis bewirkt, dass bei einer Verringerung des Dichtspaltes der Abstand zwischen den die Sicke stützenden Schenkeln an der Sickenbasis im wesentlichen erhalten bleibt. So verursacht eine Verringerung des Dichtspaltes eine Zugbeanspruchung des die Sicke überbrückenden Bleches. Die Verformung der Sicke wird durch die Verbindung der Bleche begrenzt. Dies erhöht das elastische Rückfederungsvermögen. Sowohl bei der Brenngasabdichtung als auch bei der Flüssigkeitsabdichtung wird dadurch die Dichtwirkung verbessert, da auch bei vergleichsweise großen Dichtspaltbewegungen der Kontakt mit der benachbarten Dichtfläche des Zylinderkopfes bzw. des Motorblocks aufrecht erhalten bleibt. Als Folge der erfindungsgemäßen Konstruktion kann eine zusätzliche Brennraumeinfassung entfallen: Die erfindungsgemäß konstruierten Sicken übernehmen die Funktion der Brennraumeinfassung; ein sogenannter Stopper, der im Randbereich der Brennkammereinfassung die Pressung begrenzt, entfällt. Gleichzeitig gewährleisten derart ausgebildete Sicken, dass um den Brennraum auch bei Relativbewegungen des Zylinderkopfes gegenüber dem Zylinderblock der dichtende Kontakt erhalten bleibt. Was für das Dichtsystem der Brennkammer gilt, gilt auch für die Flüssigkeitsabdichtung. Auch hier bewirkt das hohe elastische Rückfederungsvermögen der an der Basis festgelegten Sicke, dass die Flachdichtung den Horizontal- und Vertikalbewegungen im Dichtspalt über eine längere Betriebsdauer besser folgen kann. Die Gebrauchsdauer der Flachdichtung verlängert sich, da die Andruckkräfte zu den Dichtflächen des Zylinderkopfs bzw. des Motorblocks länger erhalten bleiben.
Im Querschnitt kann das Sickenprofil verschiedene Formen aufweisen, beispielsweise U-förmig oder dreiecksförmig sein. Sowohl die Federungseigenschaft als auch das Reibungsverhalten der Flachdichtung gegenüber Zylinderkopf bzw. Zylinderblock ist durch entsprechende Ausbildung des Sickenquerschnitts an die zu erwartenden Relativbewegungen im Dichtspalt sehr gut anpassbar.
Die Bleche können aus gleichem oder unterschiedlichem Material, beispielsweise aus Federstahlblechen, gebildet sein. Die Bleche können auch unterschiedlich dick sein. Selbstverständlich ist auch vorstellbar, dass andere Materialien, wie beispielsweise Metallgewebe bzw. anstelle des Metallblechs Kunststoff, verwendet werden.
Die Verbindung der beiden Bleche kann stoffschlüssig beispielsweise durch Schweißen, Löten oder Kleben erfolgen. Je nach Steifigkeit kann die Schweißnaht längs des Umfangs entweder durchgehend oder eine unterbrochene Linien- oder eine Punktverschweißung sein. Durch eine Elektronenstrahlverschweißung kann die Verbindung kostengünstig hergestellt werden.

Erfindungsgemäß weist das zweite Blech im Bereich der ersten Sicke eine zweite Sicke auf, die, von der ersten Sicke abweichend gestaltet ist. Zylinderkopf und Motorblock bestehen meist aus unterschiedlichen Werkstoffen. Indem die Sicken an den Hauptflächen der Flachdichtung jeweils unterschiedlich gestaltet sind, ist es möglich, die Flachdichtung hinsichtlich des Kontakts zu Motorblock bzw. Zylinderkopf unterschiedlich in ihrem Federungsverhalten auszuführen.

Besonderen Vorteil bietet die Erfindung, in dem zwischen dem ersten und dem zweiten Blech ein drittes Blech angeordnet ist und dieses dritte Blech in die Verbindung zwischen dem ersten und dem zweiten Blech einbezogen ist. Insbesondere dann, wenn das dritte Blech im Bereich der ersten Sicke und der zweiten Sicke eine dritte Sicke eines abweichend gestalteten Profils aufweist, kann das rückfedernde Verhalten der Dichtung gegenüber dem Motorblock bzw. gegenüber dem Zylinderkopf auch bei vergleichsweise großen Dichtspaltbewegungen sehr gut angepasst werden. Indem die erste oder zweite Sicke als Teilsicke unterteilt wird, erhält man eine größere Kontaktfläche zur Dichtfläche des Motorblocks bzw. Zylinderkopfes. Dadurch kann verhindert werden, dass sich die Sicke der Flachdichtung in den Motorblock oder in den Zylinderkopf eingräbt.

Es kann vorteilhaft sein, einen vergleichsweise großen Dichtspalt durch übereinander liegende Flachdichtungen zu überbrücken.

### Kurzbeschreibung der Zeichnungen

Zur weiteren Erläuterung der Erfindung wird auf die Zeichnungen Bezug genommen, in deren Figuren verschiedene Ausführungsformen gemäß der Erfindung schematisch dargestellt sind. Es zeigen:
- Fig. 1: eine teilweise geschnittene Draufsicht auf die erfindungsgemäße Flachdichtung und
- Fig. 2: einen Schnitt durch die erfindungsgemäße Flachdichtung.

### Ausführung der Erfindung

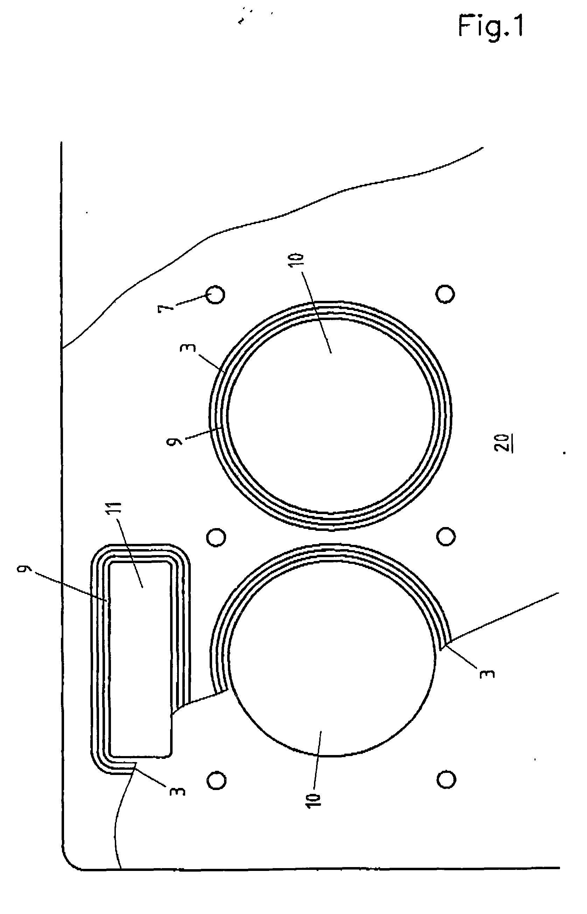

Eine Draufsicht auf die erfindungsgemäße Flachdichtung in teilweise geschnittener Darstellung ist in Fig. 1 gezeigt. Eine Flachdichtung 20 bedeckt die Dichtfläche eines Motorblocks mit Zylinderbohrungen 10 und einer Wasser- oder Öldurchlassöffnung 11. Jeder Randbereich 9 der Öffnungen 11, 10 ist von Sicken 3,5 umgrenzt. Zylinderkopf und Motorblock werden durch Zylinderkopfschrauben aneinander gepresst. In Fig. 1 sind die Bohrungen 7 für die Zylinderkopfschrauben eingezeichnet. Im Bereich dieser Zylinderkopfschrauben und im Bereich der Randbereiche der Brennkammern wirken auf die Flachdichtung die größten Presskräfte. Die Flachdichtung 20 ist mit einem elastomeren Film an der jeweils zum Zylinderkopf bzw. Motorblock liegenden Hauptfläche beschichtet.

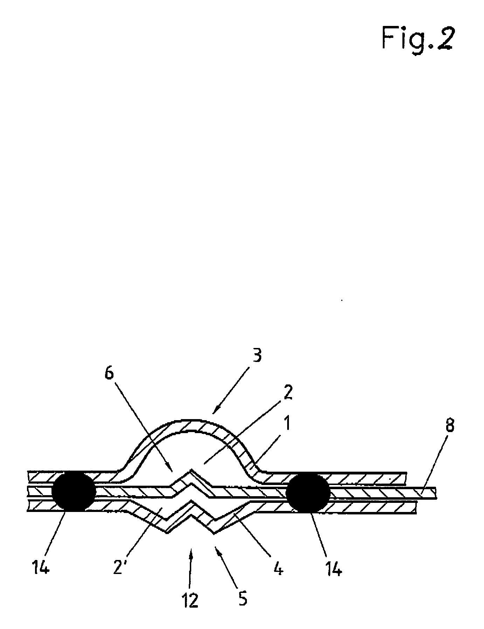

Die ganz besonders bevorzugte Ausführungsform der Erfindung ist in Fig. 2 als Ausschnitt aus einem Schnitt durch die Flachdichtung dargestellt. Zwischen den beiden Blechen 1, 4 ist ein drittes Blech 8 angeordnet. Die Verbindung 14 verbindet beidseits der Sicken stoffschlüssig die drei Bleche 1, 8, 4. Die Sicke 5 des zweiten Bleches 4 wird durch zwei Teilsicken 12 gebildet. Die Sicke 3 des Blechs 1 ist im Querschnitt U-Profilförmig gestaltet. Der zwischen den Verbindungsstellen 14 liegende Teil des dritten Bleches 8 weist ebenfalls eine dreieckförmige Sicke 6 auf. Die Bleche 1 und 8 bzw. 4 und 8 schließen jeweils Hohlräume 2, 2' ein. Die Ausführungsform gemäß Fig. 2 zeichnet sich durch hohe Elastizität aus. Innerhalb der durch die Sicke 6 vorgegebenen Grenzen gestattet diese bevorzugte Ausführung, dass bei Pressung der Flachdichtung die Verbindungsstellen 14 innerhalb der durch die Sicke 6 vorgegebenen Grenzen sich verlagern (in der Zeichnungsebene der Fig. 4 jeweils nach links bzw. nach rechts). Andererseits hält die Flachdichtung den Kontakt zu den Dichtflächen des Zylinderkopfes bzw. des Zylinderblockes auch dann aufrecht, wenn ein vergleichsweise großer Dichtspalt überbrückt werden muss. Durch die unterschiedliche Gestalt der Sicke 5 und der Sicke 3 kann die Flachdichtung hinsichtlich des Reibungsverhaltens bei unterschiedlichen Werkstoffen von Zylinderkopf und Zylinderblock sehr gut angepasst werden. Die Kontaktbereiche der Flachdichtung mit den ebenen Dichtflächen von Zylinderkopf und Zylinderblock können dadurch so gestaltet werden, dass auch nach einer langen Betriebsdauer diese Dichtflächen nicht beschädigt werden.

## Patentansprüche

1. Flachdichtung für Zylinderkopfdichtungen bei Kolbenkraftrnaschinen aus zumindest zwei aufeinander geschichteten Blechen einer Dicke von 0,05 bis 0,5 mm, die durch die Außenkontur und/oder zumindest eine Zylinderbohrung und/oder einen Wasser- oder Öldurchlass eines Zylinderkopfes gebildete Randbereiche aufweist, an denen zumindest eine umlaufende erste Sicke eines der Bleche angrenzt, wobei das zweite Blech die erste Sicke überbrückt und im Bereich der ersten Sicke zumindest eine zweite Sicke hat, die im Querschnitt des Sickenprofils unterschiedlich zur ersten Sicke ausgebildet ist, **dadurch gekennzeichnet, dass** zwischen den Blechen (1, 4) ein weiteres Blech (8) angeordnet ist und dass alle drei Bleche (1, 4, 8) beiderseits der Sicken (3, 5) an der Sickenbasis stoffschlüssig unlösbar miteinander verbunden sind.

2. Flachdichtung nach Anspruch 1, **dadurch gekennzeichnet, dass** die Sicken (3, 5) abweichend voneinander ausgestaltet sind.

3. Flachdichtung nach Anspruch 2, **dadurch gekennzeichnet, dass** die eine Sicke (5) ein Profil von geringerem Querschnitt als die andere Sicke (3) aufweist.

4. Flachdichtung nach einem der Ansprüche 1 bis 3, **dadurch gekennzeichnet, dass** das weitere Blech (8) im Bereich der Sicken (3,5) eine weitere Sike (6) mit abweichend gestaltetem Profil aufweist.

5. Flachdichtung nach Anspruch 4, **dadurch gekennzeichnet, dass** eine der Sicken (3, 5) in zumindest zwei Teilsicken (12) unterteilt ist.

## Claims

1. Flat seal for cylinder head seals in reciprocating piston engines comprising at least two layered metal sheets of a thickness of from 0.05 to 0.5 mm, which flat seal has edge areas, formed by the outer contour and/or at least one cylinder bore and/or a water or oil passage in a cylinder head, adjacent to which is at least one peripheral first bead of one of the metal sheets, the second metal sheet bridging the first bead and, in the region of the first bead, having at least one second bead which, in the cross section of the bead profile, is designed differently than the first bead, **characterized in that** a further metal sheet (8) is arranged between the metal sheets (1, 4) and **in that**, on both sides of the beads (3, 5), all three metal sheets (1, 4, 8) are undetachably connected to one another in a cohesively joined manner on the bead base.

2. Flat seal according to Claim 1, **characterized in that** the beads (3, 5) have a different design from one another.

3. Flat seal according to Claim 2, **characterized in that** the one bead (5) has a profile of a smaller cross section than the other bead (3).

4. Flat seal according to any one of Claims 1 to 3, **characterized in that** the further metal sheet (8) in the area of the beads (3, 5) has a further bead (6) having a differently shaped profile.

5. Flat seal according to Claim 4, **characterized in that** one of the beads (3, 5) is subdivided into at least two partial beads (12).

## Revendications

1. Joint d'étanchéité plat pour étanchéité de têtes de cylindres de moteurs à pistons, constitué d'au moins deux tôles d'une épaisseur de 0,05 à 0,5 mm appliquées l'une au-dessus de l'autre, qui présente des bordures formées par le contour extérieur et/ou par au moins un alésage de cylindre et/ou un passage d'eau ou d'huile d'une tête de cylindre et auxquelles au moins une première moulure périphérique d'une des tôles est adjacente, la deuxième tôle recouvrant la première tôle et présentant dans la zone occupée par la première moulure au moins une deuxième moulure dont profil a une section transversale différente de celle de la première moulure,
**caractérisé en ce que**
une autre tôle (8) est disposée entre les tôles (1, 4) et **en ce que** les trois tôles (1, 4, 8) sont reliées les unes aux autres de manière non libérable en correspondance de matière des deux côtés des moulures (3, 5) à la base des moulures.

2. Joint d'étanchéité plat selon la revendication 1, **caractérisé en ce que** les moulures (3, 5) ont des configurations différentes l'une de l'autre.

3. Joint d'étanchéité plat selon la revendication 2, **caractérisé en ce qu'**une moulure (5) présente un profil dont la section transversale est plus petite que celle de l'autre moulure (3).

4. Joint d'étanchéité plat selon l'une des revendications 1 à 3, **caractérisé en ce que** dans la zone occupée par les moulures (3, 5), l'autre tôle (8) présente une autre moulure (6) dont le profil est différent.

5. Joint d'étanchéité plat selon la revendication 4, **caractérisé en ce que** l'une des moulures (3, 5) est divisée en au moins deux parties (12) de moulure.
